**Europäisches Patentamt**

(19) **European Patent Office**

**Office européen des brevets**

(11) Numéro de publication: **0 145 533**

**B1**

(12) **FASCICULE DE BREVET EUROPÉEN**

(51) Int. Cl.⁴: **G 06 F 7/52**

(45) Date de publication du fascicule du brevet:
**16.03.88**

(21) Numéro de dépôt: **84402131.1**

(22) Date de dépôt: **23.10.84**

(54) Procédé et réseau multiplicateur pour la multiplication, modulo un nombre binaire N, de deux nombres binaires X et Y.

<table>
<tr><td>

(30) Priorité: **28.10.83 FR 8317315**

(43) Date de publication de la demande:
**19.06.85 Bulletin 85/25**

(45) Mention de la délivrance du brevet:
**16.03.88 Bulletin 88/11**

(84) Etats contractants désignés:
**CH DE GB LI**

(56) Documents cité:
**GB-A-2 067 799**
**US-A-3 302 008**
**US-A-3 582 634**
**US-A-4 281 391**

</td><td>

(73) Titulaire: **THOMSON- CSF, 173, Boulevard Haussmann, F-75379 Paris Cédex 08 (FR)**

(72) Inventeur: **Devaux, Dominique, THOMSON- CSF SCPI 173, bld Haussmann, F-75379 Paris Cedex 08 (FR)**

(74) Mandataire: **Lincot, Georges, THOMSON- CSF SCPI 19, avenue de Messine, F-75008 Paris (FR)**

</td></tr>
</table>

LIBER, STOCKHOLM 1988

**0 145 533**

## Description

L'invention concerne un procédé et un réseau multiplicateur pour la multiplication, modulo un nombre binaire N, de deux nombres binaires X et Y représentés par des signaux numériques.

Elle s'applique plus particulièrement à la réalisation de dispositifs de chiffrement à clés publiques qui exigent le calcul de fonctions exponentielles modulo des nombres binaires N, sur des grands nombres.

Les calculs des fonctions exponentielles sont le plus souvent effectués, soit à l'aide de structures logiques programmées, soit par l'intermédiaire de circuits multiplicateurs intégrés, travaillant par exemple, sur des nombres de deux fois 16 bits en parallèle pour donner des résultats sur une longueur de 32 bits.

L'inconvénient de ces dispositifs est que, pour des nombres binaires très grands, le calcul d'une fonction exponentielle prend un temps considérable pouvant varier, par exemple, lorsque les nombres binaires ont des longueurs de 128 bits, de deux secondes à une minute suivant la structure de l'operateur utilisé. Un temps de deux secondes peut être obtenu en utilisant une logique câblée autour d'un circuit multiplicateur opérant sur des nombres de deux fois 16 bits et commandé par un microprocesseur 16 bits. Ce temps par contre peut être porté à dix secondes si dans la réalisation précédente le microprocesseur à 16 bits est remplacé par un microprocesseur à 8 bits. Enfin un temps largement prohibitif, d'une minute, peut être obtenu en utilisant simplement un microprocesseur 8 bits du type par exemple 6802 commercialisé par la Société MOTOROLA.

Compte tenu du grand nombre d'exponentielles modulo N à calculer pour réaliser un chiffrement de message suivant, par exemple, l'algorithme de Rivest-Shamir-Adleman, la nécessité d'améliorer les temps de calcul apparaît évidente. Une solution à ce problème pourrait être apportée en employant l'algorithme de Horner qui permet le calcul d'une exponentielle à partir de multiplications successives. On pourrait alors envisager d'utiliser des réseaux systoliques parallèles comportant plusieurs cellules de base formées, par exemple, par un additionneur et plusieurs basculeurs, comme cela est décrit dans le brevet US 3 900 724. Ces cellules permettent en effet d'obtenir des structures de réseaux à deux dimensions a l'intérieur desquelles l'information circule de façon réguliere pour obtenir des résultats en leurs sorties de façon continue, le calcul s'effectuant toujours en permanence a l'interieur du réseau. Ces structures présentent deux intérêts, elles permettent, d'une part, de raccourcir le temps de calcul et d'autre part, d'obtenir un écoulement de l'information régulier à la manière de celui que l'on obtient avec organisation logique de type "pipe-line". Malheureusement, les réseaux systoliques parallèles, actuellement connus, n'ont pas encore reçu de structures deux fois 16 bits intégrées et de ce fait, sont très difficiles à réaliser compte tenu du grand nombre de mémoires et d'opérateurs nécessaires. De plus, les structures deux fois 16 bits demanderaient à être adaptées pour traiter des multiplications directes de nombres binaires de 128 bits, ce qui est encore manifestement impossible à réaliser.

L'invention a pour but de pallier les inconvénients précités.

A cet effet, l'invention a pour objet un procédé de multiplication, modulo un nombre binaire N, de deux nombres binaires X, Y représentés par des signaux numériques respectivement multiplicateur et multiplicande caractérisé en ce qu'il consiste à effectuer une première multiplication du signal multiplicateur par le signal multiplicande à l'aide d'un premier circuit multiplicateur, à effectuer une deuxième multiplication du résultat obtenu à la sortie du premier circuit multiplicateur par un signal numérique représentant l'inverse du nombre N à l'aide d'un deuxième circuit multiplicateur, à prendre la partie entière du résultat obtenu à la sortie du deuxième circuit multiplicateur, pour effectuer une troisième multiplication de la partie entière obtenue par un signal numérique représentant le nombre N à l'aide d'un troisième circuit multiplicateur, et à soustraire le résultat obtenu à la sortie du troisième circuit multiplicateur du résultat obtenu en sortie du premier circuit multiplicateur, pour obtenir un signal numérique R correspondant au produit modulo le nombre N, du nombre multiplicateur X par le nombre multiplicande Y.

L'invention a également pour objet un circuit multiplicateur et un réseau multiplicateur pour la mise en oeuvre du procédé de multiplication modulo N précité.

L'invention est exposée ci-après plus en détail à l'aide des dessins annexés, donnés uniquement à titre d'exemple et sur lesquels:

- la figure 1 représente, sous la forme d'un organigramme, le déroulement des différentes phases d'exécution du procédé pour effectuer une multiplication modulo N de deux nombres binaires, selon l'invention;

- la figure 2 représente la structure d'un réseau mutliplicateur modulo N, mettant en oeuvre le procédé selon l'invention,

- la figure 3 représente un schéma synoptique d'un circuit multiplicateur systolique utilisé pour la réalisation du réseau de la figure 2;

- la figure 4 est un tableau représentant le déroulement d'une opération de multiplication de deux nombres binaires ayant chacun une longueur de 4 bits;

- la figure 5 représente un exemple de réalisation d'un circuit multiplicateur systolique, pour la mise en oeuvre du procédé et du réseau multiplicateur selon l'invention;

- la figure 6 représente une variante de réalisation d'un circuit multiplicateur systolique programmé, pour la mise en oeuvre du procédé et du réseau multiplicateur selon l'invention;

- la figure 7 représente, sous la forme d'un organigramme, l'algorithme de programmation du circuit multiplicateur représenté à la figure 6;

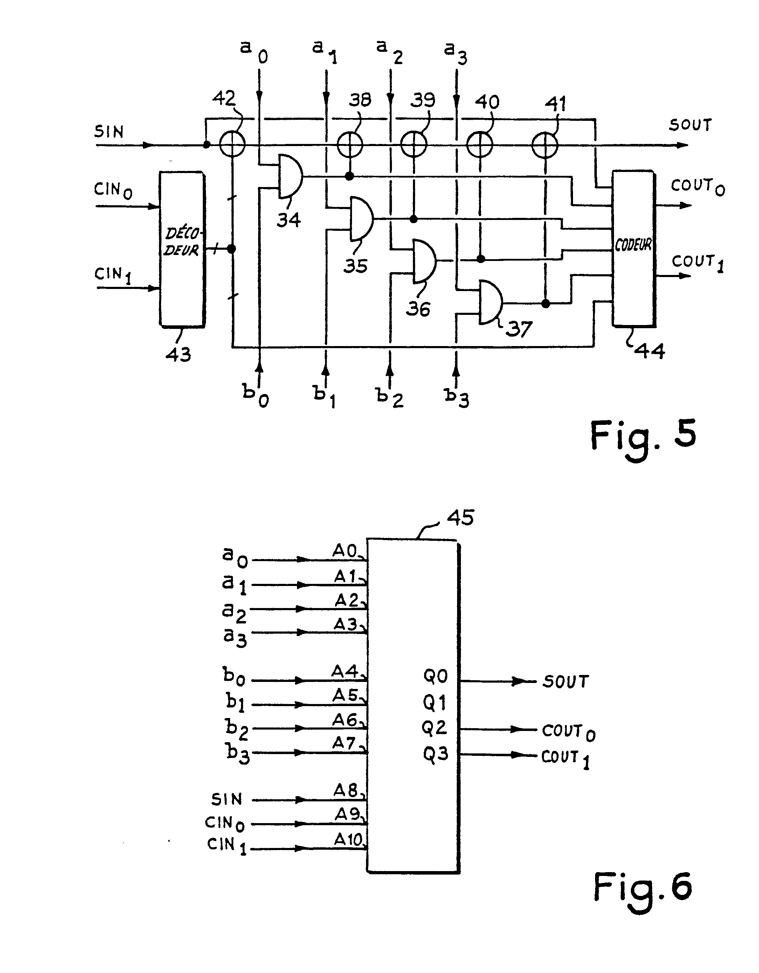

- la figure 8 représente un mode de réalisation d'un réseau multiplicateur systolique formé par une pluralité

2

de circuits multiplicateurs tels que représentés aux figures 5 et 6.

En appliquant la définition mathématique de la congruence modulo N de deux nombres, la multiplication de deux nombres X et Y modulo un nombre N, consiste à rechercher un nombre R tel que R soit le reste de la division du produit A = X.Y par un nombre Q, ce qui peut s'exprimer par la relation:

R = A(modulo N) si et seulement si A = XY = NQ + R (1)

En divisant la deuxième partie de l'expression (1) par N on obtient

$\frac{A}{N}$ = Q + $\frac{R}{N}$ (2)

et si l'on pose

$I_N = \frac{1}{N}$ (3)

l'expression (1) devient A x $I_N$ = Q + $\frac{R}{N}$ (4)

Dans cette dernière expression, le nombre Q correspond à la valeur entière du résultat de l'opération de multiplication du nombre A = X.Y par le nombre $I_N$. De là il est commode de déduire le nombre R par la relation

R = A -NQ (5)

soit encore R = A - Nx(valeur entière Ax$I_N$) (6)

Le procédé, selon l'invention, découle des remarques précédentes; il consiste, dans une première étape, à calculer le nombre A en effectuant le produit des deux nombres X et Y, à effectuer dans une deuxième étape le produit du nombre A obtenu à la première étape par le nombre $I_N$, le résultat obtenu étant égal au nombre Q, à effectuer dans une troisième étape, le produit du nombre N par le nombre Q et à retrancher à la quatrième étape le produit N.Q du nombre A, pour obtenir le nombre R.

La seule difficulté qui peut être rencontrée pour exécuter les étapes du procédé peut consister à déterminer l'inverse du nombre N pour calculer le nombre $I_N$. Cette difficulté semble pouvoir être surmontée dans la plupart des cas pratiques, ca le nombre N est généralement fixé par l'operation modulo N que l'on cherche à exécuter et son inverse peut facilement être obtenu. Si le nombre $I_N$ est calculé par défaut on aura bien sûr une incertitude sur la valeur du nombre Q trouvé. Le fait que dans ce cas, le nombre $I_N$ soit égal à $\frac{1}{N}$ - ε, implique les expressions

A x $I_N$ = $\frac{A}{N}$ -Aε = Q' (7)

En supposant que les nombres A et N sont composés respectivement de 2p et p éléments binaires la précision sur le nombre $I_N$ apparaît suffisante si le nombre ε est inférieur ou égal à $2^{-2p}$. Dans ce cas le nombre Q' est soit égal au nombre Q soit égal au nombre Q - 1. Das l'un ou l'autre cas, le résultat R est soit bon, soit majoré du nombre N. Dans le cas où le nombre R est majoré du nombre N le résultat pris en compte est égal à R' = R - N.

Le procédé qui vient d'être décrit peut aisément être étendu à l'obtention du produit de deux nombres binaires X, Y, le résultat étant obtenu modulo un nombre binaire N. Dans ce cas, le résultat de la multiplication peut être obtenu en utilisant trois fois une même structure multiplicative, une première fois pour calculer le produit X x Y, une deuxième fois pour calculer le produit A x $I_N$ et une troisième fois pour calculer le produit Q x N. En supposant que les nombres X, Y et N comportent chacun p bits, il est possible de leur donner les représentations binaires suivantes

$$X = \sum_{i=0}^{p} a_i \times 2^i \qquad (8)$$

$$Y = \sum_{i=0}^{p} b_i \times 2^i \qquad (9)$$

$$N = \sum_{i=0}^{p} c_i \times 2^i \qquad (10)$$

Le calcul du nombre $I_N$ donne alors pour résultat

$$I_N = \frac{1}{N} = \frac{1}{\sum_{i=0}^{p} c_i \times 2^i}$$

ce qui peut encore être mis sous la forme

$I_N = c_P 2^{-P}(1 - k_1 2^{-1} + k_2 2^{-2} + ... + k_P 2^{-p}) + ε$ (12)

Il est facile de constater que le nombre $I_N$ possède 2 x p termes dont les p premiers termes sont nuls.

La première multiplication des nombres X et Y a pour résultat un nombre A à 2p termes

A = $a_0 \times b_0 \times 2^0$ + ($a_1 \times b_0 + b_1 \times a_0$) x $2^1$ +...+ $_p b_p 2^{2p}$ (13)

La deuxième multiplication effectue le produit du nombre A par le nombre $I_N$ pour donner un nombre B.

3

Etant donné que les p premiers termes du nombre $I_N$ sont nuls, l'opération peut être exécutée, dans ce cas, avec les p derniers termes du nombre $I_N$. Pour rétablir le bilan des puissances, il suffit de multiplier le nombre A de l'expression (13) par $2^{-p}$ et de diviser le nombre $I_N$ de l'expression (12) par $2^{-p}$. On obtient dans ce cas

$$A' = a_0 \times b_0 \times 2^{-p} + (a_1 \times b_0 + b_1 \times a_0) \times 2^{-p-1} + ... + a_p \times b_p \times 2^p \ (12)$$

et en posant $I'_n = \frac{I_N}{c_p 2^{-p}}$ on obtient

$$I'_N = (1 - k_1 2^{-1} + k_2 2^{-2} + ... + k_p 2^{-p}) + \varepsilon' \ (13)$$

Le nombre B obtenu est alors égal au produit des nombres A' et $I'_N$ des expressions (12) et (13) soit

$$B = d_p 2^p + d_{p-1} 2^{p-1} + ... + d_1 2^1 + d_{-1} 2^{-1} + ... + d_{-2p} 2^{-2p}) + \varepsilon' A' \ (14)$$

La partie entière du nombre B, constituée des p bits de poids forts de l'expression (14) peut dès lors s'exprimer par la relation

$$Q = \sum_{i=0}^{P} d_i 2^i \qquad\qquad (15)$$

La troisième multiplication de la partie entière Q du nombre B par le nombre N, exprimé par la relation $U = Q \times N$, a alors pour résultat

$$U = c_0 d_0 + (c_1 d_0 + c_0 d_1) 2^1 + ... + c_p d_p 2^{2p} \ (16)$$

Du fait du procédé utilisé, les p bits de poids fort du nombre A et du nombre U, sont éliminés par soustraction pour obtenir le nombre R codé sur p bits suivant la relation

$$R = \sum_{i=0}^{P} r_i 2^P$$

Comme expliqué précédemment, si le résultat R est majore de N, une deuxième soustraction est à effectuer pour tenir compte d'une valeur R' = R - N.

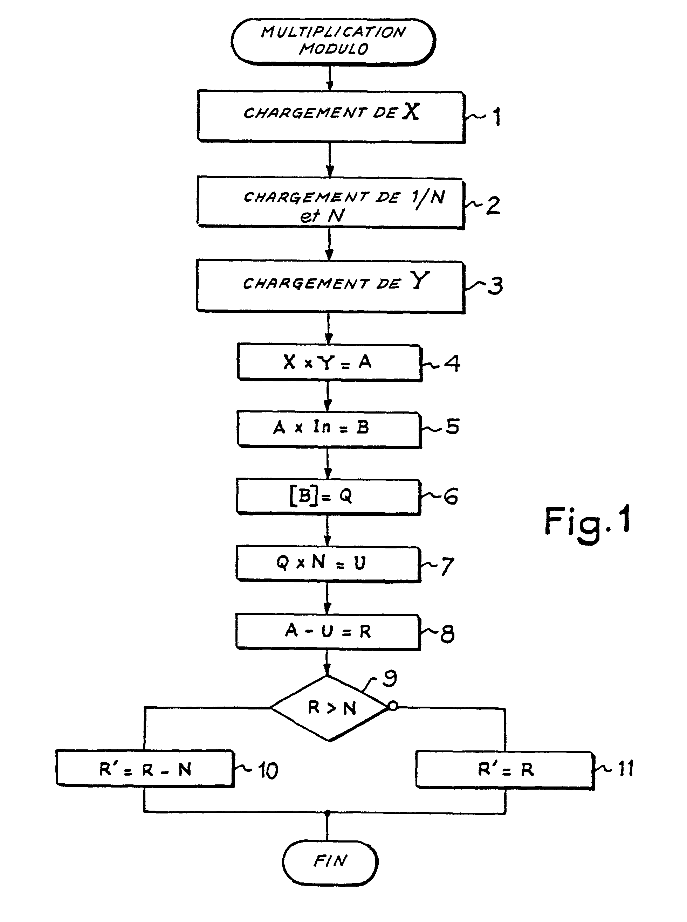

L'exécution du procédé de calcul qui vient d'être décrit, peut tout aussi bien être réalisée à l'aide, soit d'une logique microprogrammée, soit d'une logique câblée fonctionnant toutes les deux suivant un mode opératoire du type de celui représenté à la figure 1 qui montre, sous la forme d'un organigramme, le déroulement des différentes étapes d'exécution du procédé selon l'invention. Aux étapes marquées 1, 2 et 3 les nombres X, $\frac{1}{N}$, N et Y représentés à l'aide de signaux numériques sont chargés dans des registres de la structure microprogrammée ou de la logique câblée et une première multiplication du nombre X par le nombre Y est effectuée à l'étape 4 pour donner un nombre A. A l'étape 5 une deuxième multiplication du nombre A par le nombre $I_N$ est effectuée pour donner un nombre B dont la partie entière Q est extraite à l'étape 6. L'étape 7 consiste à faire le produit du nombre Q par le nombre N pour obtenir le nombre U qui est retranché du nombre A à l'étape 8 pour fournir le nombre R. A l'étape 9 le nombre R est comparé au nombre N.

Si à l'étape 9 le nombre R est plus grand que N, l'étape 10 consiste à soustraire le nombre N du nombre R obtenu pour obtenir un nombre R' qui est pris en compte comme reste de l'opération modulo N et si à l'étape 9 le nombre R est plus petit que le nombre N, le reste R' pris en compte à l'étape 11 sera égal au reste R obtenu à l'étape 8.

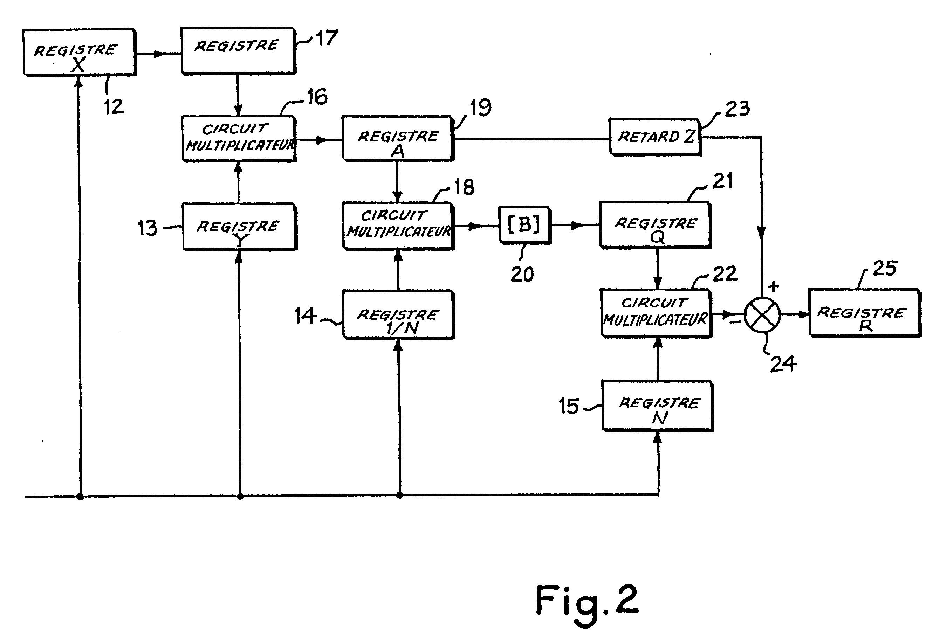

Un réseau multiplicateur pour la multiplication modulo un nombre binaire N de deux nombres binaires X et Y permettant d'exécuter les étapes du procédé précité est représenté à la figure 2. La structure logique du réseau représentée à la figure 2 comprend un ensemble de registres 12, 13, 14 et 15 dont les contenants sont chargés à l'initialisation du procédé respectivement par les nombres binaires X, Y, $\frac{1}{N}$ et le nombre N. Le registre 12 est relié à une première entrée d'un circuit multiplicateur 16 à travers un registre à décalage 17, la deuxième entrée du circuit multiplicateur 16 étant reliée à la sortie du registre 13. Le circuit multiplicateur 16 opère la multiplication des nombres binaires X et Y, et applique le nombre A, obtenu en résultat, sur une première entrée d'un deuxième circuit multiplicateur 18 à travers un registre à décalage 19. La deuxième entrée du circuit multiplicateur 18 est reliée à la sortie du registre 14. Le circuit multiplicateur 18 opère la multiplication, du nombre A calculé par le multiplicateur 16 et transféré dans le registre 19, par le nombre $\frac{1}{N}$ contenu dans le registre 14, le résultat obtenu corespond au nombre B. La partie entière Q du nombre B est extraite par un registre 20 et est transférée dans un registre à décalage 21. Un circuit multiplicateur 22 a une première entrée reliée à la sortie du registre 21 et une deuxième entrée reliée à la sortie du registre 15. Le circuit multiplicateur 22 effectue la multiplication des nombres Q et N contenus respectivement dans les registres 21 et 15, et applique le résultat de la multiplication à une première entrée d'un soustracteur 24. La deuxième entrée du soustracteur 24 est reliée à une sortie série du registre 19 à travers une ligne à retard 23. Le soustracteur 24 permet d'effectuer la soustraction du nombre A, contenu dans le registre 19, du nombre U obtenu en sortie du multiplicateur 22 et applique le résultat obtenu à l'entrée d'un registre 25. En fin d'operation de calcul, le nombre R recherché apparaît contenu dans le registre 25. Il est alors possible par des moyens de test extérieurs, non représentés, de venir vérifier la grandeur du nombre R par rapport à celle du nombre N, pour effectuer les décisions des étapes 9, 10 et 11 du procédé selon l'invention décrites précédemment au moyen de la figure 1.

Comme le but de l'invention est d'effectuer des multiplications sur des grands nombres, par exemple sur des nombres de deux fois 128 bits, les circuits multiplicateurs 16, 18 et 22 seront réalisés à l'aide des structures systoliques séries selon l'invention, de préférence, à des structures systoliques parallèles dont la complexité, pour effectuer des opérations sur des grands nombres, rend la réalisation des circuits multiplicateurs pratiquement impossible.

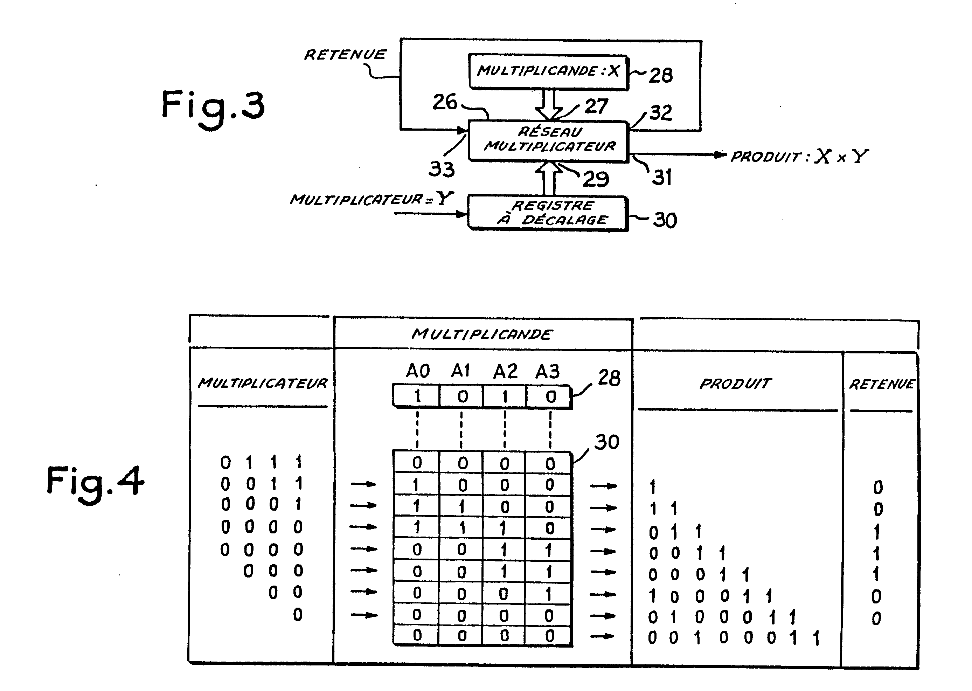

Un schéma de principe d'un circuit multiplicateur systolique série selon l'invention est décrit ci-après à l'aide du schéma de la figure 3. Le circuit multiplicateur représenté à la figure 3 comprend, un réseau de multiplication et d'addition 26 couplé, par une première entrée 27 à un registre multiplicande 28 et par une deuxième entrée 29 à un registre multiplicateur à décalage 30. Le réseau de multiplication et d'addition 26 possède également deux sorties 31 et 32, la sortie 31 fournissant le résultat de la multiplication du multiplicateur par le multiplicande et la sortie 32 fournissant les différentes retenues au fur et à mesure que le multiplicateur circule à l'intérieur du registre à décalage 30. La sortie 32 est rebouclée sur une troisième entrée 33 du réseau de multiplication et d'addition 26 pour propager la retenue obtenue à chaque décalage du multiplicateur dans le registre à décalage 30. Le circuit multiplicateur de la figure 3 permet d'effectuer la multiplication des deux nombres binaires contenus dans les registres 28 et 30. Le multiplicateur circule devant le multiplicande qui lui est fixe et le résultat sort alors de façon continue. Le fonctionnement du circuit de la figure 3 est maintenant décrit à l'aide du tableau représenté à la figure 4.

Le tableau de la figure 4 représente une operation de multiplication de deux nombres binaires A et B ayant chacun une longueur de 4 bits, le nombre binaire A ayant la valeur binaire 0101 et le nombre binaire B ayant la valeur binaire 0111, les valeurs binaires des nombres A et B correspondant respectivement aux nombres décimaux 5 et 7. Le nombre binaire A correspond au multiplicande et est représenté chargé dans le registre 28. Le mot binaire B correspond au multiplicateur et est représenté circulant dans le registre a décalage 30. Les produits obtenus à chaque décalage du multiplicateur dans le registre 30 sont représentés dans la colonne produit et les retenues correspondantes sont représentées dans la colonne retenues. A la fin de l'opération, soit après huit décalages successifs, le produit obtenu a la valeur binaire 00100011 correspondant au nombre 35 en base 10. Il est possible d'étendre le principe de l'opération de multiplication qui vient d'être décrit à des nombres binaires supérieurs à quatre bits. Pour effectuer par exemple des multiplications sur des nombres de longueur de 128 bits les registres 28 et 30 devront comporter 128 basculeurs. La réalisation d'un circuit multiplicateur systolique série fonctionnant suivant le principe décrit à l'aide du tableau de la figure 4 peut être effectué simplement à l'aide d'un circuit câblé, composé de portes ET à deux entrées et d'un ensemble de portes OU exclusif, fonctionnant suivant un algorithme où chaque bit du multiplicande est multiplié, à l'aide d'une porte ET, avec le bit correspondant de même rang dans le registre multiplicateur et où les résultats des multiplications élémentaires obtenus à la sortie de chacune des portes ET sont additionnés à l'aide de portes OU exclusif. Un exemple de réalisation d'un circuit multiplicateur systolique série selon l'invention fonctionnant suivant ce principe est décrit à l'aide du schéma de réalisation de la figure 5.

Le circuit multiplicateur représenté à la figure 5 comprend un ensemble de portes ET logiques à deux entrées notées respectivement de 34 à 37, elles reçoivent respectivement sur une première entrée les bits $a_0$, $a_1$, $a_2$, $a_3$ du multiplicande et sur une deuxième entrée les bits $b_0$ à $b_3$ du multiplicateur. Chacune des sorties des portes 34 à 37 est reliée respectivement à une entrée d'une porte OU exclusif 38 à 41. Un ensemble de portes OU exclusif 42 est prévue pour éventuellement additionner un résultat précédent S IN à éventuellement quatre retenues introduites à partir d'entrée $C IN_0$ et $C IN_1$ d'un décodeur de retenue 43. Les sorties des portes ET 34 à 37 ainsi que les sorties du décodeur de retenue 43 sont reliées respectivement à des entrées d'un codeur de retenue 44 qui délivre sur ses sorties deux signaux de retenue $C OUT_0$ et $C OUT_1$. Les signaux $C OUT_0$ et $C OUT_1$ sont appliqués éventuellement aux entrées de basculeurs non représentés extérieurs au circuit de la figure 5, pour mémoriser les retenues obtenues en cours de calcul et appliquer les retenues mémorisées aux entrées $C IN_0$ et $C IN_1$ du décodeur de retenue 43.

Une variante de réalisation du circuit multiplicateur à quatre bits selon l'invention est représenté à la figure 6. Sur cette figure le circuit multiplicateur est constitué par une mémoire PROM 45 comprenant des entrées d'adressage $A_0$ à $A_{10}$ et quatre sorties de données $Q_0$ à $Q_3$. Le multiplicande à quatre bits $a_0$ à $a_3$ est appliqué sur les entrées d'adressages $A_0$ à $A_3$ et les bits $b_0$ à $b_3$ du multiplicateur sont appliqués respectivement sur les entrées d'adressage $A_4$ à $A_7$. Le résultat précédent, s'il existe, est appliqué sur l'entrée d'adressage $A_8$. Les entrées d'adressage $A_9$ et $A_{10}$ sont utilisées pour tenir compte des retenues éventuelles $C IN_0$ et $C IN_1$ obtenues lors du calcul du résultat précédent. Le résultat de la multiplication est lu à chaque adressage sur la sortie $Q_0$ et les retenues $C OUT_0$ et $C OUT_1$ qui apparaissent en cours de calcul apparaissent sur les sorties $Q_2$ et $Q_3$ de la mémoire PROM 45. Comme dans le cas de la figure 5 les bits de retenue $C OUT_0$ et $C OUT_1$ apparaissant aux sorties $Q_2$ et $Q_3$ de la mémoire PROM 45 pourront être mémorisés par des basculeurs non représentés extérieurs pour être transmis aux entrées d'adressage $A_9$ et $A_{10}$, de façon à tenir compte des retenues obtenues lors d'un calcul pour le calcul suivant.

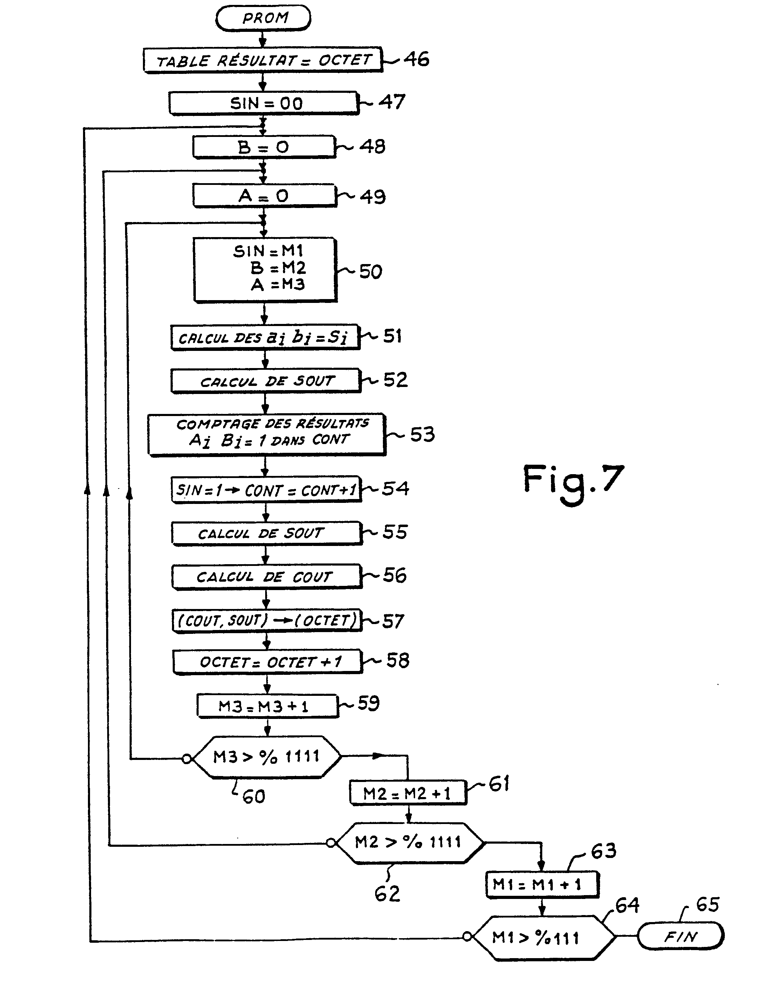

Le contenu de la mémoire PROM 45 est composé d'une table de multiplications correspondant à l'opération multiplication sur 4 bits avec propagation de deux retenues, la programmation de cette mémoire PROM pourra être effectuée à l'aide d'un simulateur, non représenté, et d'un programme de simulation de l'opération de multiplication à effectuer sur quatre bits dont un organigramme est représenté à la figure 7.

L'opération de programmation dont les étapes sont représentées à la figure 7, consiste à entrer à l'étape 46 une table de résultats sous la forme d'octets. L'initialisation du programme consiste a effectuer aux étapes 47 à 49 une initialisation à la valeur nulle des paramètres S IN, A et B du programme. A l'étape 50, les valeurs S IN, B et A sont chargées respectivement dans des registres $M_1$, $M_2$ et $M_3$ du simulateur. Les produits $a_i \times b_i = S_i$

# 0 145 533

effectués bit à bit sur les nombres A et B sont calculés à l'étape 51 et sont pris en compte à l'étape 52 pour obtenir le résultat S OUT. Un comptage des résultats pour lesquels $a_i b_i = 1$ est effectué à l'étape 53. Le contenu d'un compteur des résultats du simulateur est augmenté d'une unité à l'étape 54 chaque fois que la valeur S IN est placée dans l'état 1 logique ce qui provoque un nouveau calcul à l'étape 55 de l'état de la sortie S OUT, ainsi qu'un nouveau calcul à l'étape 56 de la sortie C OUT en fonction de l'état du compteur. A l'étape 58 les resultats S OUT et C OUT sont mémorisés sous la forme d'un octet à l'emplacement de la mémoire PROM correspondant aux adresses indiquées par les registres $M_1$, $M_2$ et $M_3$ chargés à l'étape 50. L'octet obtenu à l'étape 57 est également mémorisé dans un registre du simulateur et augmenté d'une unité à l'étape 58. A l'étape 59 le contenu de registre d'adresse $M_3$ est augmenté d'une unité puis à l'étape 60 un test est effectué sur le contenu du registre $M_3$, si ce contenu est inférieur au nombre binaire 1111 le programme revient à l'étape 50 par contre, si le contenu $M_3$ est supérieur au nombre binaire 1111 le programme continue par l'étape 61 qui consiste à augmenter d'une unité le contenu du registre d'adresse $M_2$. A l'étape 62 un test est effectué sur le contenu du registre d'adresse $M_2$ et si ce contenu est inférieur au nombre binaire 1111 le programme retourne à l'étape 49 pour effectuer à nouveau les étapes 39 à 62. Par contre si le contenu du registre d'adresse $M_2$ est supérieur au nombre binaire 1111 le programme continue vers l'étape 63 qui consiste à augmenter d'une unité le contenu du registre d'adresse $M_1$. A l'étape 64 un test est effectué sur le contenu du registre d'adresse $M_1$. Tant que le contenu du registre $M_1$ est inférieur au nombre binaire 111 le programme tourne dans la boucle formée par les étapes 48 à 64, pour s'arrêter lorsque le nombre binaire contenu dans le registre $M_1$ atteint la valeur 111.

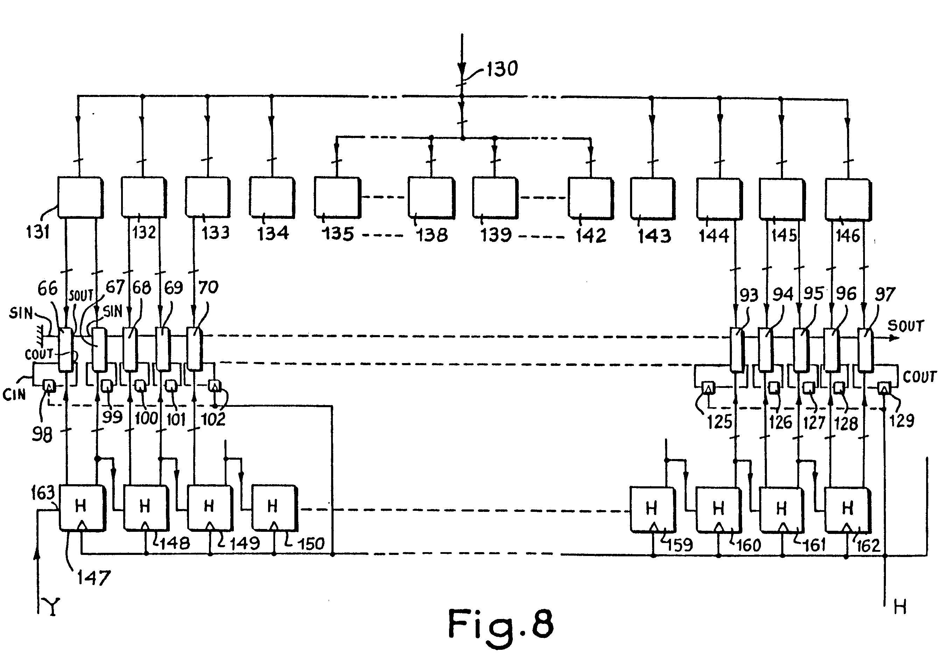

Un réseau multiplicateur de deux nombres binaires composés chacun de 128 bits, utilisant l'un ou l'autre des circuits multiplicateurs systoliques représentés aux figures 5 et 6 est maintenant décrit à l'aide du schéma représenté à la figure 8. Ce schéma qui reprend l'organisation de la structure multiplicative représentée à la figure 3 comprend un ensemble de circuits multiplicateurs à quatre bits du type de ceux précédemment décrits aux figures 5 et 6, ces circuits étant au nombre de 32 et numérotés respectivement de 66 à 97. Les circuits 66 à 97 sont montés en cascade, l'entrée S IN du premier circuit est reliée à la masse et chaque sortie S OUT d'un circuit est reliée à la sortie S IN du circuit qui le suit directement. Les sorties C OUT de chacun des circuits sont rebouclées à l'entrée C IN correspondante par l'intermédiaire de basculeurs notés respectivement de 98 à 129. Le nombre A, composé de 128 bits, est appliqué par un bus de données 130 aux entrées parallèles de registres à 8 basculeurs notés de 131 à 146. Chaque groupe de quatre bits consécutifs contenus dans un registre est dirigé vers l'entrée correspondante des circuits multiplicateurs 66 à 97. Le réseau multiplicateur de la figure 8 comprend également un ensemble de registres à huit basculeurs montés en série notés respectivement de 147 à 162, chaque tranche de quatre bits d'un registre étant appliquée à une entrée correspondante des circuits multiplicateurs 66 à 97. Chaque bit du nombre multiplicateur est rentré successivement, à l'entrée 163 du registre à décalage formé par les registres 147 à 162, au rythme de l'horloge du signal d'horloge H appliqué sur chacune des entrées d'horloge des registres 147 à 162.

Bien que le principe de la présente invention ait été décrit ci-dessus en relation avec des exemples particuliers de réalisation, il faut comprendre que la description n'a été faite qu'à titre d'exemple et ne limite pas la portée de l'invention.

D'autres variantes de réalisation sont en effet possibles et en particulier il suffira d'adapter dans chaque cas la dimension des registres et le nombre des structures multiplicatives à la longueur binaire des nombres à multiplier.

De même, il pourra être envisagé d'intégrer dans un même ensemble un circuit multiplicateur systolique série pouvant travailler sur 128, 192 ou 256 bits. Ce circuit intégré réalisé permettrait d'élaborer un opérateur de multiplication modulo N de taille réduite et de vitesse de fonctionnement élevée. En effet l'opérateur pourrait utiliser 3 fois le circuit intégré spécifique pour satisfaire les étapes multiplicatives du procédé précédemment décrit.

## Revendications

1. Procédé de multiplication, modulo un nombre binaire N, de deux nombres binaires X et Y représentés par des signaux numériques respectivement multiplicateur et multiplicande, caractérisé en ce qu'il consiste à effectuer une première multiplication du signal multiplicateur par le signal multiplicande à l'aide d'un premier circuit multiplicateur (16), à effectuer une deuxième multiplication du résultat obtenu à la sortie du premier circuit multiplicateur par un signal numérique représentant l'inverse du nombre N à l'aide d'un deuxième circuit multiplicateur (18), à prendre la partie entière du résultat obtenu à la sortie du deuxième circuit multiplicateur (18), pour effectuer une troisième multiplication de la patie entière obtenue par un signal numérique représentant le nombre N à l'aide d'un troisième circuit multiplicateur (22) et à soustraire le résultat obtenu à la sortie du troisième circuit multiplicateur (22) du résultat obtenu en sortie du premier circuit multiplicateur pour obtenir un signal numérique R correspondant au produit modulo le nombre N du nombre multiplicateur X par le nombre multiplicande Y.

2. Procédé selon la revendication 1, caractérisé en ce qu'il consiste à obtenir un signal numérique représentatif d'un nombre binaire R' égal à la différence de valeur entre les nombres R et N et à prendre la valeur de R' comme résultat de la multiplication modulo N lorsque la différence R - N est positive.

3. Procédé selon les revendications 1 et 2, caractérisé en ce que les première, deuxième et troisième multiplications sont effectuées à l'aide d'un seul et même circuit multiplicateur.

4. Réseau multiplicateur pour la multiplication modulo un nombre binaire N de deux nombres binaires X et Y pour la mise en oeuvre du procédé selon l'une des revendications 1 et 2, caractérisé en ce qu'il comprend un ensemble de trois circuits multiplicateurs systoliques séries (16, 18, 22), chaque circuit multiplicateur étant couplé d'une part à des premiers moyens (12, 17, 19, 21) pour appliquer successivement les bits du premier nombre à multiplier sur une première entrée série du circuit multiplicateur correspondant et d'autre part, à des seconds moyens (19, 14, 15) pour appliquer les bits du deuxième nombre a multiplier, respectivement en parallèle sur une deuxième entrée parallèle du circuit multiplicateur correspondant, les bits de sortie des premier et deuxième circuits multiplicateurs (16, 18) étant appliqués respectivement sur la première entrée des deuxième et troisième circuits multiplicateurs (18, 22).

5. Réseau multiplicateur selon la revendication 4, caractérisé en ce que les premiers moyens (17, 19, 21) sont constitués par des registres à décalage série.

6. Réseau multiplicateur selon les revendications 4 et 5, caractérisé en ce que les seconds moyens (13, 14, 15) sont constitués par des registres parallèles.

7. Réseau multiplicateur selon l'une quelconque des revendications 4 à 6, caractérisé en ce qu'il comprend également des moyens (20) pour extraire la patie entière du résultat fourni par la sortie du deuxième circuit multiplicateur (18) et appliquer la partie entière obtenue à l'entrée des premiers moyens (21) couplés à la première entrée série du troisième circuit multiplicateur (22).

8. Réseau multiplicateur selon la revendication 7, caractérisé en ce que les moyens (20) pour extraire la partie entière du résultat fourni pa la sortie du deuxième circuit multiplicateur sont constitués par un registre à décalage.

9. Réseau multiplicateur selon l'une quelconque des revendications 4 à 7, caractérisé en ce qu'il comprend également un soustracteur (24) couplé respectivement, par une première entrée à la sortie du premier circuit multiplicateur par l'intermédiaire des premiers moyens pour faire entrer successivement les bits à multiplier par la première entrée du deuxième circuit multiplicateur (18) et par une deuxième entrée à la sortie du troisième circuit multiplicateur (22), la sortie du soustracteur (24) fournissant le résultat R recherché correspondant au produit modulo le nombre N du nombre multiplicateur X par le nombre multiplicande Y.

10. Réseau multiplicateur selon l'une quelconque des revendications 4 à 8, caractérisé en ce que chaque circuit multiplicateur systolique série (16, 18, 22) est constitué par, au moins un circuit logique câblé comprenant un premier ensemble de portes "ET" (34, 35, 36, 37), chaque porte "ET" étant prévue pour effectuer le produit d'un bit du multiplicande par un bit du multiplicateur, un deuxième ensemble de portes "OU exclusif" reliées en cascade pour fournir sur sa sortie les résultats de multiplication, un troisième ensemble de portes "OU exclusif" (42) connecté à l'entrée du deuxième ensemble de portes "OU exclusif" (38, 39, 40, 41) pour propager les retenues de la multiplication à travers les portes "OU exclusif" du deuxième ensemble, ainsi qu'un circuit de codage (44) de retenue couplé aux sorties des portes "ET" (34, 35, 36, 37) du premier ensemble, les sorties des portes "ET" (34, 35, 36, 37) du premier ensemble étant également couplées respectivement à une entrée des portes "OU exclusif" (38, 39, 40, 41) du deuxième ensemble pour additionner les résultats élémentaires obtenus aux sorties du premier ensemble de portes "ET" (34, 35, 36, 37).

11. Réseau multiplicateur selon l'une quelconque des revendications 4 à 8, caractérisé en ce que chaque circuit multiplicateur systolique série est constitué par une mémoire morte programmable (45) adressée par les bits multiplicateurs et multiplicandes et contenant la table de multiplication formée de tous les résultats obtenus par la multiplication des bits du multiplicateur par les bits du multiplicande.

**Patentansprüche**

1. Verfahren zur Multiplikation zweier Binärzahlen X und Y modulo einer Binärzahl N, wobei die beiden Zahlen durch digitale Signale dargestellt werden und Multiplikator bzw. Multiplikand genannt werden, dadurch gekennzeichnet, daß es darin besteht, eine erste Multiplikation des Multipliziersignals mit dem Multiplikandensignal in einem ersten Multiplizierkreis (16) durchzuführen, eine zweite Multiplikation des am Ausgang des ersten Multiplizierkreises erhaltenen Ergebnisses in einem zweiten Multiplizierkreis (18) mit einem digitalen Signal durchzuführen, das den inversen Wert der Zahl N darstellt, den ganzzahligen Teil des am Ausgang des zweiten Multiplizierkreises (18) erhaltenen Ergebnisses in einem dritten Multiplizierkreis (22) mit einem digitalen Signal zu multiplizieren, das die Zahl N darstellt, und das am Ausgang des dritten Multiplizierkreises (22) erhaltene Ergebnis vom am Ausgang des ersten Multiplizierkreises erhaltenen Ergebnis abzuziehen, um ein digitales Signal R zu bilden, das dem Produkt modulo N der Multiplizierzahl X mit der Multiplikantenzahl Y entspricht.

2. Verfahren nach Anspruch 1, dadurch gekennzeichnet, daß es darin besteht, ein digitales Signal zu erhalten, das für eine Binärzahl R' gleich der Wertedifferenz zwischen den Zahlen R und N entspricht, und den Wert von R' als Ergebnis der Multiplikation modulo N zu nehmen, wenn die Differenz R-N positiv ist.

3. Verfahren nach den Ansprüchen 1 und 2, dadurch gekennzeichnet, daß die erste, die zweite und die dritte Multiplikation mithilfe eines einzigen Multiplizierkreises durchgeführt werden.

4. Multipliziernetz für die Multiplikation zweier Binärzahlen X und Y modulo einer Binärzahl N zur Durchführung des Verfahrens nach einem der Ansprüche 1 und 2, dadurch gekennzeichnet, daß es drei systolische Serienmultiplizierkreise (16, 18, 22) aufweist, die je einerseits an erste Mittel (12, 17, 19, 21) gekoppelt sind, über die nacheinander die Bits der ersten zu multiplizierenden Zahl an einen ersten Serieneingang des entsprechenden Multiplizierkreises angelegt werden, und andererseits an zweite Mittel (19, 14, 15) gekoppelt sind, über die die Bits der zweiten zu multiplizierenden Zahl parallel an einen zweiten Paralleleingang des entsprechenden Multiplizierkreises angelegt werden, wobei die Ausgangsbits der ersten und zweiten Multiplizierkreise (16, 18) an den ersten Eingang des zweiten Multiplizierkreises (18) bzw. des dritten Multiplizierkreises (22) angelegt sind.

5. Multipliziernetz nach Anspruch 4, dadurch gekennzeichnet, daß die ersten Mittel (17, 19, 21) aus Serienschieberegistern bestehen.

6. Multipliziernetz nach den Ansprüchen 4 und 5, dadurch gekennzeichnet, daß die zweiten Mittel (13, 14, 15) von Parallelregistern gebildet werden.

7. Multipliziernetz nach einem beliebigen der Ansprüche 4 bis 6, dadurch gekennzeichnet, daß es außerdem Mittel (20) aufweist, um den ganzzahligen Teil des am Ausgang des zweiten Multiplizierkreises (18) gelieferten Ergebnisses zu entnehmen und an den Eingang der an den ersten Serieneingang des dritten Multiplizierkreises (22) gekoppelten Mittel (21) anzulegen.

8. Multipliziernetz nach Anspruch 7, dadurch gekennzeichnet, daß die Mittel (20), um den ganzzahligen Teil des am Ausgang des zweiten Multiplizierkreises verfügbaren Ergebnisses zu entnehmen, von einem Schieberegister gebildet werden.

9. Multipliziernetz nach einem beliebigen der Ansprüche 4 bis 7, dadurch gekennzeichnet, daß es außerdem einen Subtrahierkreis (24) aufweist, der mit einem ersten Eingang an den Ausgang des ersten Multiplizierkreises über erste Mittel gekoppelt ist, um nacheinander die zu multiplizierenden Bits über den ersten Eingang des zweiten Multiplizierkreises (18) einzuspeisen, und über einen zweiten Eingang an den Ausgang des dritten Multiplizierkreises (22) gekoppelt ist, wobei der Ausgang des Subtrahierkreises (25) das gewünschte Ergebnis R entsprechend dem Produkt aus der Multiplikatorzahl X und der Multiplikandenzahl Y modulo der Zahl N liefert.

10. Multipliziernetz nach einem beliebigen der Ansprüche 4 bis 8, dadurch gekennzeichnet, daß jeder systolische Serienmultiplizierkreis (16, 18, 22) gebildet wird von mindestens einem festverdrahteten logischen Kreis mit einer ersten Gruppe von UND-Toren (34, 35, 36, 37), die je zur Bildung des Produkts eines Bits des Multiplikanden mit einem Bit des Multiplikators vorgesehen sind, mit einer zweiten Gruppe von EXKLUSIV-ODER-Toren, die in Kaskade verbunden sind, um an ihrem Ausgang die Multipikationsergebnisse zu liefern, mit einer dritten Gruppe von EXKLUSIV-ODER-Toren (42), die an den Eingang der zweiten Gruppe von EXKLUSIV-ODER-Toren (38, 39, 40, 41) angeschlossen ist, um die Multiplikationsüberträge über die EXKLUSIV-ODER-Tore der zweiten Gruppe weiterzuleiten, sowie mit einem Übertrags-Kodierkreis (44), der an die Ausgänge der UND-Tore (34, 35, 36, 37) der ersten Gruppe gekoppelt ist, wobei die Ausgänge der UND-Tore (34, 35, 36, 37) der ersten Gruppe außerdem an je einen Eingang der EXKLUSIV-ODER-Tore (38, 39, 40, 41) der zweiten Gruppe gekoppelt sind, um die Elementarergebnisse, die an den Ausgängen der ersten Gruppe von UND-Toren (34, 35, 36, 37) erhalten werden, zu addieren.

11. Multipliziernetz nach einem beliebigen der Ansprüche 4 bis 8, dadurch gekennzeichnet, daß jeder systolische Serienmultiplizierkreis von einem programmierbaren Festspeicher (45) gebildet wird, der von den Multiplizier- und Multiplikandenbits adressiert wird und die Multiplikationstabelle enthält, die von allen durch die Multiplikation der Bits des Multiplikators mit den Bits des Multiplikanden erhaltenen Ergebnissen gebildet wird.

## Claims

1. A method of multiplying two binary numbers X and Y defined by digital signals and respectively called multiplicator and multiplicand modulo a binary number N, characterized in that it consists in performing a first multiplication of the multiplicator signal with the multiplicand signal by means of a first multiplier circuit (16), in performing a second multiplication of the result obtained at the output of the first multplicator circuit with a digital signal defining the complement of the number N, by means of a second multiplier circuit (18), in performing a third multiplication of the integer part of the result obtained at the output of the second multiplier circuit (18) with a digital signal defining the number N by means of a third multiplier circuit (22), and in subtracting the result obtained at the output of the third multiplier circuit (22) from the result obtained at the output of the first multiplier circuit in order to obtain a digital signal R corresponding to the product modulo N of the multiplicator number X with the multiplicand number Y.

2. A method according to claim 1, characterized in that it consists in obtaining a digital signal defining a binary number R equal to the difference between the values of the numbers R and N, and in taking the value of R' as the result of the multiplication modulo N if the difference R-N is positive.

3. A method according to claims 1 and 2, characterized in that the first, second and third multiplications are performed by means of a unique multiplier circuit.

4. A multiplier network for multiplying two binary numbers X and Y modulo a binary number N, for implementing the method according to one of claims 1 and 2, characterized in that it comprises a group of three systolic series multiplier circuits, each multiplier circuit being coupled on the one hand to first means (12, 17, 19, 21) for applying successively the bits of the first number to be multiplied to a first series input of the corresponding multiplier circuit, and on the other hand to second means (19, 14, 15) for applying the bits of the second number to be multiplied respectively in parallel to a second parallel input of the corresponding multiplier circuit, the output bits of the first and second multiplier circuits (16, 18) being respectively applied to the first input of the second and third multiplier circuits (18, 22).

5. A multiplier network according to claim 4, characterized in that the first means (17, 19, 21) are constituted by series shift registers.

6. A multiplier network according to claims 4 and 5, characterized in that the second means (13, 14, 15) are constituted by parallel registers.

7. A multiplier network according to any one of claims 4 to 6, characterized in that it further comprises means (20) for extracting the integer part of the result supplied by the output of the second multiplier circuit (18) and for applying the obtained integer part to the input of the first means (21) coupled to the first series input of the third multiplier circuit (22).

8. A multiplier network according to claim 7, characterized in that the means (20) for extracting the integer part of the result supplied by the output of the second multiplier circuit are constituted by a shift register.

9. A multiplier network according to any one of claims 4 to 7, characterized in that it further comprises a subtractor (24) respectively coupled by a first input to the output of the first multiplier circuit via the first means in order to enter the bits to be multiplied successively through the first input of the second multiplier circuit (18), and by a second input to the output of the third multiplier circuit (22), the output of the subtractor (24) supplying the desired result R corresponding to the product modulo the number N of the multiplicator number X with the multiplicand number Y.

10. A multiplier network according to any one of claims 4 to 8, characterized in that each systolic series multiplier circuit (16, 18, 22) is constituted by at least one hardwired logic circuit comprising a first group of AND gates (34, 35, 36, 37), each AND gate being conceived to form the product of one bit of the multiplicand by one bit of the multiplicator, a second group of cascade connected EXCLUSIVE-OR gates conceived to supply at its output the multiplication result, a third group of EXCLUSIVE-OR gates (42) connected to the input of the second group of EXCLUSIVE-OR gates (38, 39, 40, 41) for transmitting the carry-over values of the multiplication via the EXCLUSIVE-OR gates of the second group, as well as a circuit (44) for encoding the carry-over, this circuit being coupled to the outputs of the AND gates (34, 35, 36, 37) of the first group, the outputs of the AND gates (34, 35, 36, 37) of the first group being further coupled respectively to an input of the EXCLUSIVE-OR gates (38, 39, 40, 41) of the second group for adding the elementary results obtained at the outputs of the first group of AND gates (34, 35, 36, 37).

11. A multiplier network according to any one of claims 4 to 8, characterized in that each systolic series multiplier circuit is constituted by a programmable read-only memory (45) which is addressed by the multiplicator bits and the multiplicand bits and which contains the multiplication table constituted of all the results obtained by the multiplication of the multiplicator bits by the multiplicand bits.

Fig.1

```
        MULTIPLICATION
           MODULO
              |
              v
    CHARGEMENT DE X        ~1
              |
              v
   CHARGEMENT DE 1/N       ~2
        et N
              |
              v
    CHARGEMENT DE Y        ~3
              |
              v
       X × Y = A           ~4
              |
              v
       A × In = B          ~5
              |
              v
        [B] = Q            ~6
              |
              v
       Q × N = U           ~7
              |
              v
       A - U = R           ~8
              |
              v
            /R > N\        ~9
           /       \
          /         \
   R' = R - N   ~10      R' = R   ~11
          \         /
           \       /
             FIN
```

Fig.2

0 145 533

**Fig.3**

RETENUE

MULTIPLICANDE : X ~28

26 / 27 /32

RÉSEAU MULTIPLICATEUR

33 29 /31

PRODUIT : $X \times Y$

MULTIPLICATEUR = Y

REGISTRE À DÉCALAGE ~30

**Fig.4**

| MULTIPLICATEUR | MULTIPLICANDE | | | | PRODUIT | RETENUE |
|---|---|---|---|---|---|---|
| | A0 | A1 | A2 | A3 28 | | |
| | 1 | 0 | 1 | 0 | | |
| 0 1 1 1 | 0 | 0 | 0 | 0 30 | | |
| 0 0 1 1 | 1 | 0 | 0 | 0 | 1 | 0 |
| 0 0 0 1 | 1 | 1 | 0 | 0 | 1 1 | 0 |
| 0 0 0 0 | 1 | 1 | 1 | 0 | 0 1 1 | 1 |
| 0 0 0 0 | 0 | 0 | 1 | 1 | 0 0 1 1 | 1 |
| 0 0 0 | 0 | 0 | 1 | 1 | 0 0 0 1 1 | 1 |
| 0 0 | 0 | 0 | 0 | 1 | 1 0 0 0 1 1 | 0 |
| 0 | 0 | 0 | 0 | 0 | 0 1 0 0 0 1 1 | 0 |
| | 0 | 0 | 0 | 0 | 0 0 1 0 0 0 1 1 | |

Fig. 5

Fig.6

7

Fig.7

Fig.8

0 145 533